# EUROPEAN PATENT APPLICATION

(11) **EP 1 308 271 A1**
(43) Date of publication of application: **07.05.2003**
(21) Application number: 01125433.1
(22) Date of filing: 02.11.2001
(51) Int. Cl.: B32B 7/08, B32B 27/12, B32B 5/18, B32B 7/12, C09J 7/02, C09J 7/04, G10K 11/168

(54) **Insulating web**

(71) Applicant: MILLIKEN EUROPE N.V., B-9000 Gent (BE)
(72) Inventor: Ternon, Gerard, 76210 Bolbec (FR); De Meyer, Willy, 9031 Drogen (BE); Hess, Werner, 9831 Deurle (BE); Schreibers, Jan, 9032 Wondelgem (BE); Cinget, Dominique, 80360 Combles (FR); Avio, Bruno, 59700 marq en Baroeul (FR); Faket, Mark, deceased (FR)
(74) Representative: HOFFMANN - EITLE

(57) **Abstract**

Disclosed is an insulating web comprising a substrate of a textile fabric material connected with a layer of a polymer foam by stitching or knitting through the polymer foam, wherein the polymer foam is made from a material capable of acting as a hot-melt adhesive and/or an additional adhesive is provided on at least one side of the composite formed of the substrate and the polymer foam; and a method of manufacturing such an insulating web, comprising the steps of providing a sheet-like polymer foam material, providing a textile fabric substrate, adhering them to each other by knitting or stitching through the polymer foam. Furthermore, the invention concerns the use of the insulating web as a vibration dampening product for at least partially insulating one or more components from mechanical and/or sound vibrations, as an adhesive tape in the production of automotives or as an adhesive tape in medical and health care applications.

## Description

### Field of the Invention

The present invention relates to an insulating web, and more particularly to a flexible insulating web comprising a substrate of a textile fabric material connected with a layer of a polymer foam by stitching or knitting through the polymer foam, wherein the polymer foam is made from a material capable of acting as a hot-melt adhesive and/or an additional adhesive is provided on at least one side of the composite formed of the substrate and the polymer foam.

Preferably, in the insulating web at least a part of the yarns and/or fibers forming the textile fabric substrate reach through the polymer foam thus adhering the polymer foam to the substrate. Also, in a preferred embodiment the insulating web is present in the form of a tape.

The insulating web of the invention is particularly useful as a vibration dampening product for at least partially insulating one or more components from mechanical and/or sound vibrations. Such a vibration dampening product may preferably be in the form of a tape, especially an adhesive tape, such as a cable wrap or harness tape, and it will be convenient to hereinafter describe the invention in relation to this exemplary application. It should be appreciated, however, that the invention is not limited to vibration dampening applications, but that other tape and sheeting applications are also possible. Other applications include automotive applications and adhesive tapes in the medical and health sector.

Furthermore, for the purposes of this specification it will also be appreciated that the term "web" is intended as a generic reference to a relatively thin planar element, such as a sheet or strip; such webs typically having a thickness of not more than about 6 mm.

### Background of the Invention

For use in insulating webs, especially in form of (adhesive) tapes, such as cable wrap or harness tape, foam-coated flexible webs are already known. However, the provision of further improvements in this field - namely, superior tape properties and/or simpler and more cost-effective production techniques, are continuously demanded. The present invention is concerned with such improvements.

### Summary of the Invention

According to one aspect, the present invention provides an insulating web, and more particularly a flexible insulating web comprising a substrate of a textile fabric material connected with a layer of a polymer foam by stitching or knitting through the polymer foam, wherein the polymer foam is made from a material capable of acting as a hot-melt adhesive and/or an additional adhesive is provided on at least one side of the composite formed of the substrate and the polymer foam.

Preferably, in the insulating web at least a part of the yarns and/or fibers forming the textile fabric substrate reach through the polymer foam thus adhering it to the substrate. Also, in a preferred embodiment the insulating web is present in the form of a tape.

Preferably, the textile fabric substrate is an essentially two-dimensional open fabric construction.

According to another aspect, the present invention also provides a method of manufacturing an insulating web, comprising the steps of providing a sheet-like polymer foam material, providing a textile fabric substrate, adhering them to each other by knitting or stitching through the polymer foam, and, if applicable, coating at least one side of the resulting composite with an adhesive.

In a preferred embodiment the knitting or stitching through the polymer foam is performed with at least a part of the yarns/fibers constituting the textile fabric substrate at the time the textile fabric substrate is prepared.

The invention also concerns the use of the above insulating web as a vibration dampening product for at least partially insulating one or more components from mechanical and/or sound vibrations, preferably in form of a tape, especially an adhesive tape, such as a cable wrap or harness tape, as an adhesive tape in the production of automotives or as an adhesive tape in medical and health care applications. In a preferred use, the insulating web is thermally and/or mechanically shaped into a three-dimensional form prior to its application to a member.

By providing the above solution to the problem mentioned above, the following improvements, among others, over the prior art are achieved:
- By using a pre-formed polymer foam material the production of a polymer foam in situ during the manufacture of the insulating web is avoided. Thus, the potential hazards involved with the handling of reactive monomers, solvents, foaming agents etc. can be avoided during this process. Furthermore, the polymer foam can be produced separately at a site which may be better adapted to the specific needs than a production site where textile materials have to also be processed simultaneously.
- By connecting the textile fabric substrate with the polymer foam by knitting or stitching through the polymer foam, three-dimensional patterns can be produced on the surface of the insulating web, such as knobs of the polymer material protruding from the surface on which the polymer is laminated, or protruding through the textile fabric substrate to the other side, insulating materials which are wrinkled or provided with folds, etc.
- The textile fabric material can be made very lightweight since the number and size of openings present therein is not limited by the need to provide sufficient support for a coating composition. Thus, an insulating web having a closed or substantially closed surface can be prepared from a textile fabric substrate with large openings, which requires low amounts of material.
- If the knitting or stitching through the polymer foam is performed with at least a part of the yarns/fibers constituting the textile fabric substrate at the time the textile fabric substrate is prepared, no additional yarn is required to connect the polymer foam with the textile fabric substrate. Thus, the amount of material is reduced without reducing the stability of the obtained insulating web, thus reducing the amount of overall costs.
- Problems regarding the chemical compatibility of the textile fabric substrate with any coating composition for the polymer foam are avoided, thus broadening the range of materials to be combined with each other.

○ By connecting the fabric with the foam according to the present invention solves the problems connected with fabric/foam combinations where laminating is technically difficult and/or expensive.

### Detailed Description of the Invention

The present invention will be illustrated below, by defining the textile fabric substrate, the polymer foam, the connection of these constituents with each other, further optional constituents of the textile fabric substrate and/or the polymer foam, and preferred embodiments and alternatives in detail.

### The Polymer Foam

According to the present invention, the polymer foam is a sheet-like polymer material, which may be formed by either chemical, mechanical or physical foaming methods or chemical reactions which are known in the art. In the case of a chemical foam, chemical blowing agents such as carbonates, bicarbonates, azocarbamide, sulfonylhydrazides and pyrophosphates may be used. In the case of a mechanical foam, appropriate additives, such as ammonium derivatives or ammonium laurylsulfate, may be used to create the foam mechanically. In the case of a physical foam, expandable microspheres may be used.

After producing a sheet-like polymer foam according to any method known in the art, the polymer foam sheet may then pass between a pair of calendar rolls, between which the polymer foam layer is compressed or densified, thereby forming the final foam structure. Alternatively, such a calendaring treatment can be performed after laminating the polymer foam with the textile fabric substrate.

The sheet-like polymer foam may represent a solid sheet having no holes or openings, or it may have holes or openings which may be distributed over the surface of the sheet in regular or irregular patterns. Examples of foam sheets having holes or openings are web-like structures, mesh-like structures, or sheets having slits and/or pinholes. Preferably, holes or openings cover only a minor part of the entire sheet area, and the total area covered by holes or openings preferably is not more than 20 % of the sheet area, more preferably not more than 10 %. In a preferred embodiment the sheet shows substantially no openings or holes.

In a preferred form of the invention the polymer foam composition may include acrylics, nitriles, polyurethane (PU), styrene-butadiene rubber latex (SBR), EVA, PVAC, neoprene, PVDC1, and/or EAA in combination with blends thereof and/or copolymers, or foams based on PP, PE, PVC, including thermoplastic foams.

The polymer foam may be made from a material capable of acting as a hot-melt adhesive. Preferred are thermoplastics (preferred embodiments are PP are PE), polymer foams not fully crosslinked during the foam formation (preferred embodiments are PU resins and acrylics), polymer foams which soften if heated (preferred embodiments are PU resins).

In a particularly preferred embodiment of the invention, the polymer foam layer is inherently heat resistant and flame retardant. Heat resistance (HR) and flame retardance (FR) are two important characteristics for products such as harness tape or cable wrap as well as in automotive applications. Typically, such products are used in electro-mechanical systems that produce mechanical and/or sound vibrations as they operate. For safety reasons in such electro-mechanical applications, it is usually required that such tapes exhibit heat resistance and/or flame retardance. By rendering these characteristics as inherent properties of the polymer foam layer, the invention provides a superior product having a simpler production technique. That is, no additional treatment or production step is required to achieve the heat resistant and/or fire-resistant properties of the insulating web.

"Heat resistance" is generally understood as the ability to resist changes in the physical properties of the foam despite increase in temperature, possibly to extreme levels. "Flame retardance" refers to a tendency not to burn, or a resistance to burning. The heat resistance and flame retardance of the polymer foam layer are preferably designed to satisfy industry norms (e.g. SSFMV302).

To achieve the desired flame retardance, halogen compounds, e.g. a fluorocarbon compound or commonly known chlorine and/or bromine containing flame retardants may be incorporated in the polymer foam composition. Alternatively, halogen-free FR compounds such as polyphosphate based products (e.g. Flovan cgn® and alternatives), silicates, polyphosphates, ammonium polyphosphates and derivatives. Furthermore, other additives to the polymer foam composition such as antimony and phosphorous oxide compounds (e.g. antimony trioxide and antimony pentoxide), melamines and derivates, expandable graphites, intumiscent systems and/or aluminum hydrates (e.g. trihydrate) can be included. Heat resistance can be provided by incorporation of PU dispersions or fillers such as silica, clay, graphite or other inert materials.

In a preferred embodiment the polymer foam layer is provided with intrinsically good release properties by inclusion of a release agent into the polymer foam composition or via applying the release agent on the top surface of the adhesive tape. The release agent useful in the present invention is not specifically limited, and those known in the art can be applied. Also, the addition amount thereof is not critical, as long as the effects achieved by the present invention are not impaired. Preferred examples for the release agents are fluorocarbons, waxes, plasticizers or silicones. The addition amount of the release agent is preferably 20 wt.-% or less, based on the total weight of the polymer foam, more preferably 10 wt.-% or less, even more preferably 0.5-8 wt.-%, especially preferred 1-5 wt.-%.

Due to the presence of the release agent, the insulating web present as a tape strip can easily be unwound from a spool or reel. Since in this case the release properties are intrinsic properties of the polymer foam, the manufacture of the insulating web is further simplified as a special release coating, such as a lacquer, need not be applied. However, the present invention also encompasses embodiments having a lacquer release coating instead of or in addition to the release agent present in the polymer foam.

In a preferred form of the invention the insulating web is also oil repellent and/or hydrophobic (i.e. water repellent). Preferably, these properties are achieved by the choice of binder and by the presence of an oil-repellant and/or a water-repellant in the polymer foam, thus making this foam intrinsically oil- and/or water repellent. Alternatively or additionally, the insulating web may comprise a layer or coating having oil- and/or water repellent properties.

The oil- and/or water-repellant useful in the present invention is not critical, and those known in the art can be applied. Also, the addition amount thereof is not critical, as long as the effects achieved by the present invention are not impaired.

Preferred examples for the oil-repellants are fluorocarbons, silicone-based compounds, waxes, and plasticizers. The addition amount of the oil-repellant preferably is 20 wt.-% or less, based on the total weight of the polymer foam, more preferably 2-15 wt.-%, especially preferably 4-10 wt.-%.

Preferred examples for the water-repellants are fluorocarbons, silicone-based compounds, waxes, and plasticizers. The addition amount of the water-repellant preferably is 20 wt.-% or less, based on the total weight of the polymer foam, more preferably 2-15 wt.-%, especially preferably 4-10 wt.-%.

In another preferred embodiment the insulating web has anti-microbial and/or anti-fungal properties. Again, it is preferred that these properties are achieved by the presence of an anti-microbial agent and/or an anti-fungal agent in the polymer foam, thus providing intrinsic anti-microbial and/or anti-fungal properties. Alternatively or additionally, the insulating web may comprise a layer or coating having any or both of these properties.

The anti-microbial agent and/or an anti-fungal agent useful in the present invention is not critical, and those known in the art can be applied. Also, the addition amount thereof is not critical, as long as the effects achieved by the present invention are not impaired.

In yet another preferred embodiment the polymer foam layer may comprise flocking applied as an outer layer. That is, "flocking", or discontinuous textile fibers, may be applied (typically before drying or curing) during the manufacture of the polymer foam. This provides the insulating web with an additional level of "cushioning", thereby enhancing its vibration dampening and sound absorption properties. Flocking may also increase the durability of the insulating web product.

The present insulating web preferably can be torn by hand, especially in the transverse direction if the insulating web is present in the form of a tape, as will be outlined in more detail below. In this connection it is to be noted that the polymer foam of course is intrinsically tearable by hand.

The polymer foam may contain further other additives than those already described to achieve specific additional properties, depending on the intended use. These additives are those generally known in the art, e.g. colorants, dyes, pigments, fillers, antioxidants, antiozonants, lubricants, weathering agents, UV-stabilizers, rheology modifiers etc.

Each of the above additives may be a single compound, or may represent a mixture of two or more compounds. The polymer foam may contain two or more of the above different types of additives in combination.

These additives are not specifically limited, and those known in the art can be applied. Also, the addition amount thereof is not critical. However, in each case the addition amount should be selected such that the effects achieved by the present invention are not impaired. Preferred additives and addition amounts are given below.

Preferred examples of the colorants and dyes are polymeric colorant and dye materials. The addition amount of the colorant and/or dye preferably is 5 wt.-% or less, based on the total weight of the polymer foam, more preferably 1-3 wt.-%.

Preferred examples of the pigments are carbon black, titanium oxide and other commonly known organic and inorganic pigments. The addition amount of the pigment preferably is 5 wt.-% or less, based on the total weight of the polymer foam, more preferably 1-3 wt.-%.

Preferred examples of the fillers are calcium carbonates, kaolin, or PU powders or granules. The addition amount of the filler preferably is 5-40 wt.-%, based on the total weight of the polymer foam, more preferably 6-25 wt.-%, especially preferred 7-15 wt.-%.

Preferred examples of the antioxidants are p-phenylenediamine based products. Preferred examples of the lubricants are waxes, oils and PEGs. Preferred examples of the weathering agents and of the UV-stabilizers are phenyl based products and benzoates.

The thickness of the foam layer is not specifically limited, but may preferably be within a range of 0.05-5.0 mm, more preferably 0.5-4.0 mm, most preferably 1.0-3.0 mm.

The bulk density of the foam is not specifically restricted, but is preferably within the range of 10-300 g/cm³, more preferably 15-150 g/cm³. The weight per unit area in the insulating web is preferably within the range of 10-200 g/cm³, more preferably 20-100 g/cm³.

If the textile substrate, the foam and, if present, the optional plastic foil or sheet are made from similar or identical chemical compositions, recycling of the insulating tape is facilitated.

A concrete example of a preferred polymer foam is a polymer foam formed from a mixture of SBR, acrylate and polyurethane, which includes halogen additives which provide fire retardant and heat resistant properties, and fluorocarbon and silicone additives to provide both oil- and water-repellant properties.

### The Textile Fabric Substrate

The primary function of the textile fabric substrate is to provide the foam layer with a desired degree of robustness and dimensional stability necessary to allow the respective intended practical use. Preferably, the textile fabric substrate contributes to the total weight and the total material present in the insulating web as little as possible. In general, the textile fabric substrate is a material of substantially two-dimensional structure, which shows a more or less structured or patterned surface, depending on the intended application of the insulating web comprising it.

By employing a preferred textile fabric substrate having an open fabric construction (i.e. a relatively low-density construction exhibiting a plurality of apertures there-through between the fibers or filaments of the fabric), the textile fabric substrate is able to be formed relatively lightweight with low material requirements, and therefore at a lower cost. The open substrate construction is also advantageously able to achieve tearability by hand in at least a transverse direction.

When combined with the polymer foam sheet, the open substrate construction is substantially closed (i.e. the apertures through the fabric substrate are covered or sealed) so that there is substantially no "strike-through" of adhesive when an adhesive compound is subsequently applied to the web to provide the adhesive properties.

The textile fabric substrate may be any fabric material, and is preferably selected from woven fabrics, non-woven fabrics, laid fabrics, multi-axial fabrics and knitted fabrics, including weft and warp knitted fabrics. More preferably, the textile fabric substrate is a fabric that can be formed in such a manner that at least a part of the yarns and/or fibers forming this substrate are knitted or weaved through a polymer foam sheet at the time of producing this substrate, thus adhering them with each other, such as woven or knitted fabrics. In one particular embodiment, the substrate is a weft inserted-warp knitted (WIWK) fabric.

The fibers or yarns used in the fabric substrate may be spun yarns, monofil, multifil (flat or textured) and/or tape yarns and may comprise any one or more of a wide variety of natural, synthetic or inorganic material including, but not limited to, cotton, wool, nylon, rayon, aramid, polyamide, polyethylene, polypropylene, polyester, PEN, PBO and PEEK. As an alternative, the present invention also contemplates that the substrate may be formed from glass and/or carbon fibers or cord.

The thickness (dtex) of the yarns to be included in the textile fabric substrate is not specifically limited, but may preferably be within a range of 10-500 dtex, more preferably 15-250 dtex, most preferably 33-170 dtex.

In a preferred embodiment, especially if present in the form of a tape, the tear strength of the insulating web is higher in the longitudinal direction than in the transversal direction of the tape, and the tear strength in the transversal direction is such that the tape can be torn by hand. This allows the application of pieces having an appropriate size without requiring any cutting tools.

In the textile fabric substrate the number of warps and wefts, where applicable, is preferably 2-50 cm⁻¹, more preferably 3-44 cm⁻¹, most preferably 6-32 cm⁻¹.

Also, in the textile fabric substrate the number of columns (or wales) and of rows (or courses), where applicable, is preferably 2-50 cm⁻¹, more preferably 3-44 cm⁻¹, most preferably 6-32 cm⁻¹. The number of columns and rows, respectively, is not necessarily the same.

The weight of the textile fabric substrate is not specifically limited and can be selected depending on the intended application of the insulating web. If a closed structure of the textile fabric substrate is desired, the weight is preferably within the range of 15-200 g/m², more preferably 20-150 g/m², most preferably 20-90 g/m². If an open structure of the textile fabric substrate is intended, wherein the weight thereof, based on the entire insulating material, is as low as possible a preferred weight range is 4-60 g/m², more preferably 10-40 g/m², most preferably 10-30 g/m².

To achieve the desired heat resistance and/or flame retardance of the present insulating web as discussed above in connection with the polymer foam, the textile fabric substrate of the insulating web of the present invention may also be provided with heat resistance and flame retardance.

As one option, the textile fabric substrate may be pre-treated for any one of the above properties before application of the foam. The flame retardants and additives providing heat resistance are not limited, and preferred embodiments are those mentioned in the description of the polymer foam above. These agents can be applied to the textile fabric substrate by e.g. spraying of a solution or dispersion to the substrate, or dipping the substrate into such a solution or dispersion, and drying the impregnated fabric substrate.

Alternatively, the fibers and/or yarns present in the substrate may be provided with heat resistance and/or flame retardance in advance, and the substrate is then produced from materials already showing these properties.

In a more concrete example of a preferred embodiment, the textile fabric substrate has an open construction and is a knitted fabric, more preferably a weft inserted-warp knitted (WIWK) fabric from polyester.

In a more preferred embodiment the insulating web of the present invention is tearable by hand, in the transverse direction and/or in the longitudinal direction.

### The Adhesive

According to one embodiment of the present invention, the composite comprising the textile fabric substrate and the polymer foam adhered to each other has an adhesive provided on at least one side thereof. The adhesive may be provided by known techniques, e.g. by spraying or coating.

This adhesive is preferably selected from acryl based compositions, polyisoprene, polybutadiene, (optionally hydrogenated) C₅₋₉-hydrocarbons, rosins, rosinesters, terpenes, DCPD-based products and blends thereof.

The adhesive may cover one or both entire surface(s) of the present insulating web, or it may be applied in regular or irregular patterns, depending on the intended application. Examples for patterns include stripes, dots, mesh-like structures, irregular or randomly occurring areas covered with adhesive etc. Preferably, the adhesive is provided on the entire surface, or in a regular pattern such as dots, stripes or mesh-like structures.

The amount of adhesive is not specifically limited, but may preferably be in the range of 5-50 g/m², more preferably 10-40 g/m², especially preferably 5-50 g/m². The amount of adhesive to the total weight of the tape is preferably in the range of 15-75 wt.-%, more preferably 20-60 wt.-%, especially preferably 25-50 wt.-%.

In a preferred embodiment of the insulating web, the textile substrate and the polymer foam are made from similar or identical chemical materials, thus facilitating recycling. More preferred is the use of PE-foams combined with PE fabrics, or the use of PP-foams combined with PP fabrics.

### Other Optional Constituents

The insulating web may comprise, besides its mandatory constituents, additional layers or coatings, e.g. to achieve properties such as oil repellence, water repellence, anti-microbial and anti-fungal properties, specific aesthetic effects, etc.

The materials useful to this end are those mentioned above in connection with the polymer foam material.

### Method for the Manufacture of the Insulating Web

The polymer foam layer is connected with the textile fabric substrate by stitching or knitting through the polymer foam. Preferably, at least a part of the yarns and/or fibers forming the textile fabric substrate reach through the polymer foam.

Preferably, this knitting or stitching through the polymer foam is performed with at least a part of the yarns/fibers constituting the textile fabric substrate at the time the textile fabric substrate is prepared. This means that, at the time of producing the textile fabric substrate by knitting or weaving at least a part of the yarns/fibers constituting the textile fabric substrate through the polymer foam. Thus, the warps and/or wefts or the courses and/or wales forming the substrate, at the same time, serve to fix the polymer foam to the substrate.

The materials which can be used for the textile fabric substrate, the polymer foam, the optional adhesive and the other additives described in connection with the textile fabric substrate and/or the polymer foam, as well as the preferred embodiments for carrying out this method are those described in detail above.

Preferably, the foam sheet or foil is supplied towards the knitting or stitching machine. E.g. the foam sheet can be unwound from a roll. If a weft yarn is used on a weft insertion warp knitted machine, the weft is positioned on an endless chain and brought forward to the knitting zone. The weft can be positioned on top of or under the foam sheet. Stitching or knitting yarn is unwound from beams and lead via eye needles which lap the yarn around the knitting (or stitching) needles. The latter stitch through the foam layer and the stitching yarn in lapped around the needle. The needle pulls the stitching (or knitting) yarn through the foam layer and the stitch is formed as known in the art. It is possible to use an inlay warp also as in known in WIWK. The stitch forms the fabric in connecting via yarn loops the stitching yarns and if these are present, the warp and weft yarn. The stitch connect also the so formed fabric to the foam layer.

Machines on which these constructions can be made include:
◆ RS3P-MSU-V (Karl Mayer)
◆ Copcentra HS2-HV (Liba)
◆ Copcentra HS-3-ST-V0 (Liba)
◆ Copcentra HS2-CH (Liba)
◆ Copcentra HS2-ST-VU (Liba)
◆ RS2-MSUS-V (Karl Mayer)

### Examples

To further illustrate the present invention an example of preferred embodiments is described below. However, these examples are in no way intended to limit the scope of the present invention.

### Textile Fabric Support

The textile Fabric support was made from 50 dtex flat polyester filament yarn as the stitching yarn and 167 dtex textured polyester yarn as the weft yarn. The fabric construction made via stitching through the foam was a 7.29 stitching yarns/cm (18 gauge WIWK knitting machine) and 3.54 wefts/cm was prepared using a RS3P-MSU-V knitting machine manufactured by Karl Mayer (Germany). The lapping pattern used was 0-1/1-0//. The weight of the obtained fabric was 19 g/m².

As the polymer foam two different foams were used.

In the first example, a polyurethane foam (Flikes 314D Grijs 1039, supplied by Recticel, Belgium) having a thickness of 0.5 mm and a weight of 42.8 g/m² a polyurethane foam was used. in the second example a polyurethane foam (Soseal LPF 18 Grijs 1039, supplied by Recticel, Belgium) having a thickness of 0.58 mm, and a weight of 88.4 g/m² was used.

Due to the knitting through the foam as described above, the foam was pressed somewhat together in the longitudinal direction, resulting in an increased weight per unit area of the foam in the final product as compared with the weight of the foams defined above. The foam is positioned between the underlap and the overlap of the stitching yarn, with the weft yarn being present on the same side as the overlap.

According to the first example, an insulating web having a weight (textile fabric + polymer foam)of 60.8 g/m² was obtained, while the second example yielded an insulating web having a weight (textile fabric + polymer foam)of 88.4 g/m².

A commercially available acrylic adhesive (4792 LE of 3M corporation) was applied to the web to create an adhesive tape.

## Claims

1. Insulating web comprising a substrate of a textile fabric material connected with a layer of a polymer foam by stitching or knitting through the polymer foam, wherein the polymer foam is made from a material capable of acting as a hot-melt adhesive and/or an additional adhesive is provided on at least one side of the composite formed of the substrate and the polymer foam.

2. Insulating web of claim 1, wherein the polymer foam comprises thermoplastic polymers, PE, PP, PVC, acrylics, nitriles, polyurethane (PU), styrene-butadiene rubber latex (SBR), EVA, PVAC, neoprene, PVDC1, and/or EAA in combination with blends thereof and/or copolymers.

3. Insulating web of claim 1 or 2, wherein the polymer foam is made from a material capable of acting as a hot-melt adhesive.

4. Insulating web of any of the preceding claims, wherein at least a part of the yarns and/or fibers forming the textile fabric substrate reach through the polymer foam, thus adhering the polymer foam to the substrate.

5. Insulating web of any of the preceding claims, wherein the textile fabric substrate is an essentially two-dimensional open fabric construction.

6. Insulating web of any of the preceding claims, wherein the insulating web is present as a tape.

7. Insulating web of any of the preceding claims, wherein the polymer foam shows substantially no openings or holes.

8. Insulating web of any of the preceding claims, wherein the textile fabric substrate and/or the polymer foam are provided with at least one inherent property selected from heat resistance, flame retardant properties, oil-repellant properties and water-repellant properties.

9. Insulating web of any of the preceding claims, wherein the textile fabric substrate and/or the polymer foam further comprise at least one additive selected from anti-microbial agents, anti-fungal agents, colorants, dyes, pigments, fillers, antioxidants, antiozonants, lubricants, weathering agents, and UV-stabilizers.

10. Insulating web of any of the preceding claims, wherein the polymer foam further comprises flocking applied as an outer layer.

11. Insulating web of any of the preceding claims, which further comprises at least one further layer selected from a plastic foil or sheet.

12. Insulating web of any of the preceding claims, wherein the adhesive is present in form of a strip.

13. Insulating web of any of the preceding claims, which is present in form of an adhesive tape and comprises
i) a textile fabric substrate having an open construction and representing a weft inserted-warp knitted (WIWK) fabric from polyester,
ii) a polymer foam formed from a mixture of SBR, acrylate and polyurethane which includes at least one halogen additive to provide fire retardant and heat resistant properties, and at least one fluorocarbon and/or silicone additive to provide oil- and water-repellant properties, and
iii) an adhesive coated on at least one side of the insulating web, selected from acryl based compositions, polyisoprene, polybutadiene, C₅₋₉ hydrocarbons and hydrogenated C₅₋₉ hydrocarbons, rosins and rosinesters, terpenes, DCPD- based products and blends.

14. Insulating web of any of the preceding claims, which is present in form of an adhesive tape and comprises
i) a textile fabric substrate having an open construction and representing a weft inserted-warp knitted (WIWK) fabric from polyester,
ii) a polymer foam formed which can act as a hot melt adhesive polymer.

15. Method of manufacturing an insulating web of any of the claims 1-14, comprising the steps of providing a sheet-like polymer foam material, providing a textile fabric substrate, adhering them to each other by knitting or stitching through the polymer foam, and, if required, coating at least one side of the resulting composite with an adhesive.

16. Method of claim 15, wherein the knitting or stitching through the polymer foam is performed with at least a part of the yarns/fibers constituting the textile fabric substrate at the time the textile fabric substrate is prepared.

17. Use of the insulating web according to any of the claims 1-14 as a vibration dampening product for at least partially insulating one or more components from mechanical and/or sound vibrations in the form of cable wrap or harness tape, an adhesive tape in the production of automotives or an adhesive tape in medical and health care applications, optionally after thermally and/or mechanically shaping the insulating web into a three-dimensional form prior to its application to a member.
